# EUROPEAN PATENT SPECIFICATION

(11) **EP 3 895 917 B1**
(45) Date of publication and mention of the grant of the patent: **05.06.2024**
(21) Application number: 20169552.5
(22) Date of filing: 15.04.2020
(51) Int. Cl.: B60D 1/14, B60D 1/24, B60T 7/20, B60D 1/04, B60D 1/44, B61D 11/00, B61G 1/36, B60D 1/18, E21F 13/00

(54) **TOWING ARRANGEMENT AND MOBILE WORK MACHINE**
SCHLEPPVORRICHTUNG UND MOBILE ARBEITSMASCHINE
AGENCEMENT DE REMORQUAGE ET MACHINE DE TRAVAIL MOBILE

(43) Date of publication of application: 20.10.2021
(73) Proprietor: Sandvik Mining and Construction Oy, 33330 Tampere (FI)
(72) Inventor: MIKKOLA, Jussi, 33330 Tampere (FI)
(74) Representative: Sandvik

(56) References cited:
- EP-A1- 3 415 398
- WO-A1-2015/073960
- DE-B- 1 236 954
- GB-A- 1 387 274
- US-A- 4 402 523
- US-A1- 2004 066 089
- US-A1- 2017 166 022

## Description

### BACKGROUND

The invention relates to a towing arrangement for a mine machine.

The invention further relates to a mine machine.

For safety reasons, many mine machines use hydraulically-released brake systems to provide automatic fail-safe braking on loss of vehicle power or hydraulic fluid pressure. Such brakes prevent a disabled machine from easily being towed. In order to tow the disabled machine easily, it is known to provide towing or retrieval hook of such a mine machine with a releasing arrangement that releases brake when the machine is towed from the hook, thus permitting the towing of the disabled mine machine. One example of such towing hook is disclosed in the patent publication EP 3415398 A1.

However, existing releasing arrangements are difficult to arrange in often limited room at the end of the machine.

### BRIEF DESCRIPTION

The invention discloses a mobile work machine with a towing arrangement comprising a towing element for allowing a towing tool to be connected to the towing arrangement, the towing element being arranged to move in relation to the frame of the work machine when a towing force is affecting to the towing element, a hydraulic actuator, a first part of the hydraulic actuator attached to the frame, and a second part of the hydraulic actuator connected to the towing element, such that the hydraulic actuator is arranged to create hydraulic pressure along with movement of the towing element in relation to the frame, wherein the towing arrangement comprises a flexible connection element that is arranged to connect the towing element to the hydraulic actuator for transmitting said movement of the towing element to the hydraulic actuator, the arrangement further comprising at least one guide member arranged to change the course of the connection element, wherein the guide member is a pulley.

Thereby a towing arrangement being easy to fit in a mobile work machine may be achieved. An advantage of the guide member is that the route of the connection element may be changed to pass components of the machine, and that the hydraulic actuator may be arranged more freely in the machine. An advantage of the pulley is that the running of the connection element in the guide member is fluent and the pulling force needed for activating the hydraulic actuator may be lowered.

Thereby a mobile work machine the towing arrangement of which is optimally located may be achieved.

The scope of the invention is defined by the appended claims.

In one embodiment, the towing element comprises a hook. An advantage is that the hook is easy and fast to use in towing.

In one embodiment, the hydraulic actuator comprises a hydraulic cylinder. An advantage is that hydraulic cylinders have a simple structure and they are straightforwardly adaptable to the arrangement.

In one embodiment, the piston rod is the first part attached to the frame, and the cylinder housing is the second part connected by the flexible connection element to the towing element. An advantage is that the shape of the piston rod may be varied for optimizing the placing and dimensions of the hydraulic cylinder.

In one embodiment, the cylinder housing is the first part attached to the frame, and the piston rod is the second part connected by the flexible connection element to the towing element. An advantage is that the room taken up by the hydraulic cylinder may be minimized.

In one embodiment, the flexible connection element is connected to the hydraulic cylinder such that the hydraulic cylinder gets shorter along with the towing force affecting to the towing element. An advantage is that pressure in the piston side chamber of the hydraulic cylinder, i.e. side opposite to a chamber of piston rod side, may be created and connected to the hydraulic circuit of the braking system and large volume flow of pressure fluid out from the cylinder is achieved compared to outer dimensions of the cylinder.

In one embodiment, the flexible connection element is connected to the hydraulic cylinder such that the hydraulic cylinder gets longer along with the towing force affecting to the towing element. An advantage is that this embodiment may enable easier realization of the arrangement in some mobile work machines.

In one embodiment, the connection element comprises a cable. An advantage is that cables have a simple structure and they may bend in all directions.

In one embodiment, the connection element comprises a chain. An advantage is that chains may have a very inelastic structure even under high tensions.

In one embodiment, the connection element comprises a belt. An advantage is that belts may bend in small bending radius and still have a very inelastic structure even under high tensions.

In one embodiment, the connection element comprises a rope. An advantage is that ropes have a simple structure and they may bend in all directions. In one embodiment, at least a part of the length of the connection element is arranged in a casing. An advantage is that the casing may protect the connection element against external stresses. Additionally, the casing may have a curved shape and thus the route of the connection element may be changed by the casing.

In one embodiment, the hydraulic actuator comprises a returning element arranged to return the hydraulic actuator in its initial position when the towing element is released from the towing force. An advantage is that the hydraulic actuator may return quickly to the original position.

In one embodiment, the hydraulic actuator comprises connectors for connection to a hydraulic circuit of a braking system of the mobile work machine, and wherein hydraulic pressure created in the hydraulic actuator due to the towing force affecting to the towing element is arranged to release brakes of the mobile work machine. An advantage is that the arrangement controls the braking system in a simple way.

### BRIEF DESCRIPTION OF FIGURES

Some embodiments illustrating the present disclosure are described in more detail in the attached drawings, in which
Figure 1 is a schematic view of a towing arrangement,
Figure 2 is a schematic view of a part of another towing arrangement,
Figure 3 is a schematic view of a third towing arrangement, and
Figure 4 is a schematic view of a hydraulic actuator.

In the figures, some embodiments are shown simplified for the sake of clarity. Similar parts are marked with the same reference numbers in the figures.

### DETAILED DESCRIPTION

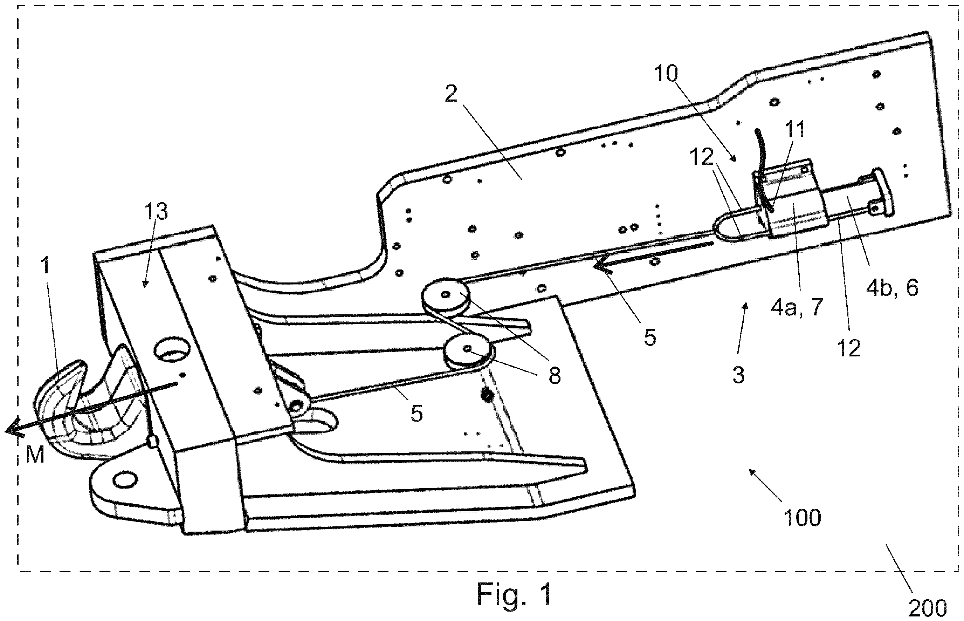

**Figure 1** is a schematic view of a towing arrangement. According to an aspect of the invention, the towing arrangement 100 described in this description is arranged in a mobile work machine. The mobile work machine may be any type of a utility vehicle, such as a tractor, a truck, a farming machine, a forestry machine etc. According to an aspect of the invention, the work machine is a mine machine or a construction machine. In mines - such as underground mines and surface mines - and at other work sites different type of work machines are used. The work machine is provided with one or more working device (s) . For instance, the mine machine may be provided with working device (s) for executing mine work task at a work site. The mine machine or a construction machine may be e.g. a rock drilling rig, a development drill, a tunneling drilling machine, a surface drilling machine, a bolting or reinforcing vehicle, a rock removal machine, a longhole drill rig, an explosive charging machine, a loader, a transport vehicle, a loading or hauling machine, setting vehicles of gallery arcs or nets, a concrete spraying machine, a crusher or a measuring vehicle.

The arrangement 100 comprises a towing element 1 for allowing a towing tool to be connected to the towing arrangement 100. In one embodiment, such as shown in Figures, the towing element 2 comprises a hook. In some other embodiments, the towing element is other type of element, such as a loop.

The towing element 1 is arranged to move in relation to the frame 2 of the work machine when a towing force is affecting to the towing element 1, the towing force shown as an arrow M.

The towing arrangement 100 comprises a hydraulic actuator 3 that has two parts such that a first part 4a is attached to the frame 2, and a second part 4b is connected to the towing element 1. The towing arrangement 100 comprises a flexible connection element 5 that is arranged to connect the towing element 1 to the hydraulic actuator 3 for transmitting the movement of the towing element 1 to the hydraulic actuator 3. The hydraulic actuator 3 is arranged to create hydraulic pressure along with movement of the towing element 1 in relation to the frame 2. The connection element 5 is flexible so that it has an ability to bend and this way change its course. However, the connection element 5 is inelastic or inextensible to the extent that the movement of the towing element can be transmitted to the hydraulic actuator 3.

In an embodiment, the connection element 5 comprises a cable, such as metal cable the thickness of which is, 8-10 mm, for instance. In an embodiment, the connection element 5 comprises a chain. In an embodiment, the connection element 5 comprises a belt. In an embodiment, the connection element 5 comprises a rope.

In an embodiment, there is at least one guide member 8 that is arranged to change the course of the connection element 5. In an embodiment, such as shown in Figure 1, the guide member 8 is a pulley that may rotate around its axle. In the embodiments where the connection element 5 comprises a chain or a belt, the pulley may be e.g. a sprocket.

In an embodiment, the guide member 8 comprises a guide surface, such as a rider shoe, on which the connection element 5 bends from one direction to another direction.

In an embodiment, the hydraulic actuator 3 is a hydraulic cylinder that comprises a piston rod 6 and a cylinder housing 7. In an embodiment, such as shown in Figure 1, the cylinder housing 7 is attached to the frame 2, and the piston rod 6 is connected by the flexible connection element 5 to the towing element 1. The flexible connection element 5 is connected to the hydraulic cylinder such that the hydraulic cylinder gets shorter along with the towing force affecting to the towing element 2.

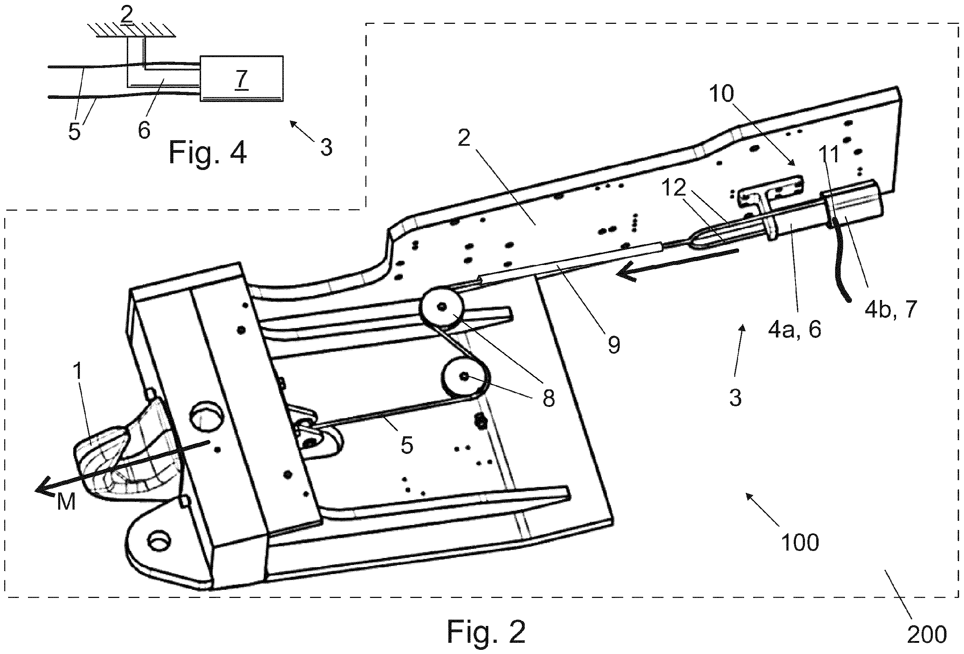

In an embodiment, such as shown in Figures 1 and 2, the outer profile of the cylinder housing 7 is not round but polygon, for instance square.

In an embodiment, the end of the flexible connection element 5 attached to the piston rod 6 is has a multibranched design, i.e. it has at least two branches 12. The branches 12 are connected to the second part 4b, i.e. the moving part, so that a balanced movement of the second part 4b is assured. In another embodiment, the flexible connection element 5 comprises two, or even more, separately and parallel arranged components that extends form the towing element 1 to the hydraulic actuator 3.

According to an aspect of the invention, the hydraulic actuator 3, such as the hydraulic cylinder, is connected to the hydraulic circuit of the braking system of the mobile work machine 200 so that hydraulic fluid may flow from the hydraulic actuator 3 to said hydraulic circuit and vice versa. The connection may comprise hydraulic hoses, couplings etc.

The hydraulic actuator 3 comprises connectors 11 for connecting said actuator to a hydraulic circuit of a braking system of the mobile work machine 200. The hydraulic pressure created in the hydraulic actuator 3 due to the towing force affecting to the towing element 2 is arranged to release brakes of the mobile work machine 200.

In an embodiment, a piston side chamber, i.e. side opposite to a chamber of piston rod side, of the hydraulic cylinder is connected to the hydraulic circuit of the braking system such that brakes of the mobile work machine 200 are released by pressure created in said piston side chamber. Volume of the piston side chamber is larger because the volume is not limited by piston rod, and thus a large volume flow of pressure fluid out from the cylinder is achieved compared to outer dimensions of the cylinder. This makes it possible e.g. to use smaller cylinder in the arrangement 100.

In an embodiment, the arrangement 100 comprises a returning element 10 arranged to return the hydraulic actuator 3 in its initial position when the towing element 1 is released from the towing force. In an embodiment, such as shown in Figure 1, the returning element 10 is integrated in the hydraulic actuator 3, i.e. hydraulic cylinder, either inside or outside thereof. In an embodiment, the returning element 10 comprises a spring, such as a coil spring, arranged inside the cylinder or around the exterior of the cylinder. In an embodiment, the spring is arranged separately from the hydraulic actuator 3 In an embodiment, the returning element 10 comprises gas, for example nitrogen. Said gas is arranged in a closed chamber, the volume of which changes when the cylinder is compressed. Change in the volume causes pressure of the gas either to drop or raise. As the towing element 2 is released from the towing force, said gas helps the actuator to return in its initial length.

In an embodiment, the arrangement 100 is provided with at least one returning element 13 of the towing element. This returning element 13 is arranged to return the towing element 1 in its initial position in relation to the frame 2 when towing element 1 is released from the towing force. The returning element 13 may comprise e.g. a spring, such as a coil spring or a leaf spring, or a gas spring. As soon as the towing force F is withdrawn, the returning element 13 forces the towing element 1 to return in its rest state. Following this, the brakes of the mine machine go on, and the mine machine does not move unintentionally. In an embodiment, the brakes go on when the towing element 2 and the body part 1 have retracted completely. In another embodiment, the brakes go on when the towing element 2 and the body part 1 have retracted a predetermined length towards the rest state. In other words, the brakes go on prior to the towing element 2 and the body part 1 have reached the rest state. Said predetermined length may be, e.g. 50 mm - 200 mm, for instance 80 mm, 100 mm, or 150 mm.

**Figure 2** is a schematic view of a part of another towing arrangement. In an embodiment, the hydraulic actuator 3 is a hydraulic cylinder, the piston rod 6 of which is the first part 4a attached to the frame 2. The cylinder housing 7 of the hydraulic cylinder is the second part 4b connected by the flexible connection element 5 to the towing element 1. An example of this embodiment is shown in Figure 2.

In an embodiment, the arrangement 100 comprises a casing 9 in which at least a part of the length of the connection element 5 is arranged. The casing 9 may comprise e.g. a metal tube. The casing may be straight, as in Figure 2, or it may curve at least in one direction for changing the course of the connection element 5.

Another embodiment of the hydraulic actuator 3 wherein the piston rod 6 is attached to the frame 2 is shown in **Figure 4****.** The piston rod 6 has a curve or bend of 90° that enables attachment of the actuator 3 to the frame 2 by an alternative way. The piston rod may have even plurality of curves or bends, and the magnitude of the angle thereof may vary.

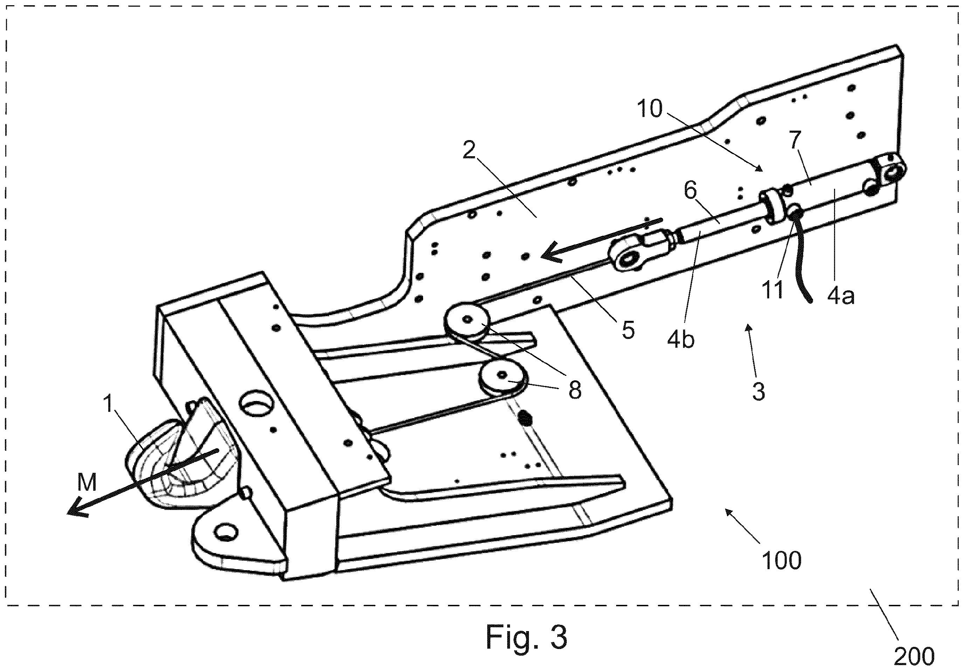

**Figure 3** is a schematic view of a third towing arrangement. In some embodiments, such as shown in Figure 3, the flexible connection element 5 is connected to the hydraulic cylinder such that the hydraulic cylinder gets longer along with the towing force affecting to the towing element 2. In these embodiments, the cylinder housing 7 may be attached to the frame 2, and the piston rod 6 is connected by the flexible connection element 5 to the towing element 1, or vice versa, meaning that the piston rod 6 is attached to the frame 2 and the cylinder housing 7 is connected to the flexible connection element 5.

In an embodiment, such as shown in Figure 3, a chamber of piston rod 6 side of the hydraulic cylinder is connected to the hydraulic circuit of the braking system by the connector 11 such that brakes of the mobile work machine 200 are released by pressure created in said piston side chamber.

In the Figures, the hydraulic actuator 3 is arranged at least essentially horizontally and directed in lengthwise direction of the mobile work machine 200. However, this is not always necessary, since it is possible to route the connection element 5, by e.g. using guide members 8 and casings 9, in many ways. Thus, it is possible to arrange the hydraulic actuator 3 in a vertical position, or a position that is between horizontal and vertical positions.

The vertical or partly vertical position may ease venting of the hydraulic actuator. The position of the hydraulic actuator 3 may be transverse, even perpendicular, to the lengthwise direction of the mobile work machine 200.

The invention is not limited solely to the embodiments described above, but instead many variations are possible within the scope of the inventive concept defined by the claims below. Within the scope of the inventive concept the attributes of different embodiments and applications can be used in conjunction with or replace the attributes of another embodiment or application.

The drawings and the related description are only intended to illustrate the idea of the invention. The invention may vary in detail within the scope of the inventive idea defined in the following claims.

### REFERENCE SYMBOLS

- 1: towing element
- 2: frame
- 3: hydraulic actuator
- 4a, b: parts of hydraulic actuator
- 5: connection element
- 6: piston rod
- 7: cylinder housing
- 8: guide member
- 9: casing
- 10: returning element of actuator
- 11: connector
- 12: branch of connection element
- 13: returning element of towing element

- 100: towing arrangement
- 200: mobile work machine

- M: moving direction

## Claims

1. A mobile work machine comprising a towing arrangement (100), the arrangement (100) comprising
- a towing element (1) for allowing a towing tool to be connected to the towing arrangement (100),
- the towing element (1) being arranged to move in relation to the frame (2) of the work machine when a towing force is affecting to the towing element (1),
- a hydraulic actuator (3),
- a first part (4a) of the hydraulic actuator (3) attached to the frame (2), and
- a second part (4b) of the hydraulic actuator (3) connected to the towing element (1), such that
- the hydraulic actuator (3) is arranged to create hydraulic pressure along with movement of the towing element (1) in relation to the frame (2), wherein
- the towing arrangement (100) comprises a flexible connection element (5) that is arranged to connect the towing element (1) to the hydraulic actuator (3) for transmitting said movement of the towing element (1) to the hydraulic actuator (3),
**characterized in that**
- the arrangement (100) further comprises at least one guide member (8) arranged to change the course of the connection element (5), wherein the guide member (8) is a pulley.

2. The mobile work machine as claimed in claim 1, wherein the towing element (1) comprises a hook.

3. The mobile work machine as claimed in claims 1 or 2, wherein the hydraulic actuator (3) is a hydraulic cylinder that comprises a piston rod (6) and a cylinder housing (7) .

4. The mobile work machine as claimed in claim 3, wherein the piston rod (6) is the first part (4a) attached to the frame (2), and the cylinder housing (7) is the second part (4b) connected by the flexible connection element (5) to the towing element (1).

5. The mobile work machine as claimed in claim 3, wherein the cylinder housing (7) is the first part (4a) attached to the frame (2), and the piston rod (6) is the second part (4b) connected by the flexible connection element (5) to the towing element (1).

6. The mobile work machine as claimed in any of claims 3 - 5, wherein the flexible connection element (5) is connected to the hydraulic cylinder such that the hydraulic cylinder gets shorter along with the towing force affecting to the towing element (2).

7. The mobile work machine as claimed in any of claims 3 - 5, wherein the flexible connection element (5) is connected to the hydraulic cylinder such that the hydraulic cylinder gets longer along with the towing force affecting to the towing element (2).

8. The mobile work machine as claimed in any of the preceding claims, wherein the connection element (5) comprises at least one of the following: a cable, a chain, a belt, and a rope.

9. The mobile work machine as claimed in any of the preceding claims, wherein at least a part of the length of the connection element (5) is arranged in a casing (9).

10. The mobile work machine as claimed in any of the preceding claims, wherein the hydraulic actuator (3) comprises a returning element (10) arranged to return the hydraulic actuator (3) in its initial position when the towing element (1) is released from the towing force.

11. The mobile work machine as claimed in any of the preceding claims, wherein the hydraulic actuator (3) comprises connectors (11) for connection to a hydraulic circuit of a braking system of the mobile work machine (200), and wherein hydraulic pressure created in the hydraulic actuator (3) due to the towing force affecting to the towing element (2) is arranged to release brakes of the mobile work machine (200).

12. A mobile work machine as claimed in any of the preceding claims, wherein the mobile work machine is a mine machine.

## Patentansprüche

1. Mobile Arbeitsmaschine, die eine Schleppanordnung (100) umfasst, wobei die Anordnung (100) umfasst
- ein Schleppelement (1), um zu ermöglichen, dass ein Schleppwerkzeug mit der Schleppanordnung (100) verbunden wird,
- wobei das Schleppelement (1) angeordnet ist, um sich in Bezug zum Rahmen (2) der Arbeitsmaschine zu bewegen, wenn eine Schleppkraft auf das Schleppelement (1) einwirkt,
- ein hydraulisches Aktuator (3),
- einen ersten Teil (4a) des hydraulischen Aktuators (3), der am Rahmen (2) angebracht ist, und
- einen zweiten Teil (4b) des hydraulischen Aktuators (3), der mit dem Schleppelement (1) verbunden ist, sodass
- das hydraulische Aktuator (3) angeordnet ist, um zusammen mit Bewegung des Schleppelements (1) Hydraulikdruck in Bezug zum Rahmen (2) zu erzeugen, wobei
- die Schleppanordnung (100) ein flexibles Verbindungselement (5) umfasst, das angeordnet ist, um das Schleppelement (1) zum Übertragen der Bewegung des Schleppelements (1) auf das hydraulische Aktuator (3) mit dem hydraulischen Aktuator (3) zu verbinden,
**dadurch gekennzeichnet, dass**
- die Anordnung (100) weiter mindestens ein Führungsglied (8) umfasst, das angeordnet ist, um den Lauf des Verbindungselements (5) zu ändern, wobei das Führungsglied (8) eine Umlenkrolle ist.

2. Mobile Arbeitsmaschine nach Anspruch 1, wobei das Schleppelement (1) einen Haken umfasst.

3. Mobile Arbeitsmaschine nach den Ansprüchen 1 oder 2, wobei das hydraulische Aktuator (3) ein Hydraulikzylinder ist, der eine Kolbenstange (6) und ein Zylindergehäuse (7) umfasst.

4. Mobile Arbeitsmaschine nach Anspruch 3, wobei die Kolbenstange (6) der erste Teil (4a) ist, der am Rahmen (2) angebracht ist, und das Zylindergehäuse (7) der zweite Teil (4b) ist, der über das flexible Verbindungselement (5) mit dem Schleppelement (1) verbunden ist.

5. Mobile Arbeitsmaschine nach Anspruch 3, wobei das Zylindergehäuse (7) der erste Teil (4a) ist, der am Rahmen (2) angebracht ist, und die Kolbenstange (6) der zweite Teil (4b) ist, der über das flexible Verbindungselement (5) mit dem Schleppelement (1) verbunden ist.

6. Mobile Arbeitsmaschine nach einem der Ansprüche 3 - 5, wobei das flexible Verbindungselement (5) mit dem Hydraulikzylinder verbunden ist, sodass der Hydraulikzylinder zusammen mit der Schleppkraft, die auf das Schleppelement (2) einwirkt, kürzer wird.

7. Mobile Arbeitsmaschine nach einem der Ansprüche 3 - 5, wobei das flexible Verbindungselement (5) mit dem Hydraulikzylinder verbunden ist, sodass der Hydraulikzylinder zusammen mit der Schleppkraft, die auf das Schleppelement (2) einwirkt, länger wird.

8. Mobile Arbeitsmaschine nach einem der vorstehenden Ansprüche, wobei das Verbindungselement (5) mindestens eines vom Folgendem umfasst: ein Kabel, eine Kette, einen Riemen und ein Seil.

9. Mobile Arbeitsmaschine nach einem der vorstehenden Ansprüche, wobei mindestens ein Teil der Länge des Verbindungselements (5) in einer Hülle (9) angeordnet ist.

10. Mobile Arbeitsmaschine nach einem der vorstehenden Ansprüche, wobei das hydraulische Aktuator (3) ein Rückstellelement (10) umfasst, das angeordnet ist, um das hydraulische Aktuator (3) in seine Ausgangsposition zurückzustellen, wenn das Schleppelement (1) von der Schleppkraft gelöst wird.

11. Mobile Arbeitsmaschine nach einem der vorstehenden Ansprüche, wobei das hydraulische Aktuator (3) Verbinder (11) zum Verbinden mit einem Hydraulikkreis eines Bremssystems der mobilen Arbeitsmaschine (200) umfasst, und wobei Hydraulikdruck, der aufgrund dessen, dass die Schleppkraft auf das Schleppelement (2) einwirkt, im hydraulischen Aktuator (3) erzeugt wird, angeordnet ist, um Bremsen der mobilen Arbeitsmaschine (200) zu lösen.

12. Mobile Arbeitsmaschine nach einem der vorstehenden Ansprüche, wobei die mobile Arbeitsmaschine eine Minenmaschine ist.

## Revendications

1. Engin de chantier mobile comprenant un agencement de remorquage (100), l'agencement (100) comprenant
- un élément de remorquage (1) pour permettre à un outil de remorquage d'être raccordé à l'agencement de remorquage (100),
- l'élément de remorquage (1) étant conçu pour se déplacer par rapport au châssis (2) de l'engin de chantier lorsqu'une force de remorquage agit sur l'élément de remorquage (1),
- un actionneur hydraulique (3),
- une première partie (4a) de l'actionneur hydraulique (3) fixée au châssis (2), et
- une seconde partie (4b) de l'actionneur hydraulique (3) raccordée à l'élément de remorquage (1), de telle sorte que
- l'actionneur hydraulique (3) est conçu pour créer une pression hydraulique avec un mouvement de l'élément de remorquage (1) par rapport au châssis (2), dans lequel
- l'agencement de remorquage (100) comprend un élément de raccordement flexible (5) qui est conçu pour raccorder l'élément de remorquage (1) à l'actionneur hydraulique (3) pour transmettre ledit mouvement de l'élément de remorquage (1) à l'actionneur hydraulique (3),
**caractérisé en ce que**
- l'agencement (100) comprend en outre au moins un organe de guidage (8) conçu pour modifier le parcours de l'élément de raccordement (5), dans lequel l'organe de guidage (8) est une poulie.

2. Engin de chantier mobile selon la revendication 1, dans lequel l'élément de remorquage (1) comprend un crochet.

3. Engin de chantier mobile selon la revendication 1 ou 2, dans lequel l'actionneur hydraulique (3) est un vérin hydraulique qui comprend une tige de piston (6) et un carter (7) de vérin.

4. Engin de chantier mobile selon la revendication 3, dans lequel la tige de piston (6) est la première partie (4a) fixée au châssis (2), et le carter (7) de vérin est la seconde partie (4b) raccordée par l'élément de raccordement flexible (5) à l'élément de remorquage (1).

5. Engin de chantier mobile selon la revendication 3, dans lequel le carter (7) de vérin est la première partie (4a) fixée au châssis (2), et la tige de piston (6) est la seconde partie (4b) raccordée par l'élément de raccordement flexible (5) à l'élément de remorquage (1).

6. Engin de chantier mobile selon l'une quelconque des revendications 3-5, dans lequel l'élément de raccordement flexible (5) est raccordé au vérin hydraulique de telle sorte que le vérin hydraulique raccourcisse lorsque la force de remorquage agit sur l'élément de remorquage (2).

7. Engin de chantier mobile selon l'une quelconque des revendications 3-5, dans lequel l'élément de raccordement flexible (5) est raccordé au vérin hydraulique de telle sorte que le vérin hydraulique s'allonge lorsque la force de remorquage agit sur l'élément de remorquage (2).

8. Engin de chantier mobile selon l'une quelconque des revendications précédentes, dans lequel l'élément de raccordement (5) comprend au moins l'un des éléments suivants : un câble, une chaîne, une courroie et une corde.

9. Engin de chantier mobile selon l'une quelconque des revendications précédentes, dans lequel au moins une partie de la longueur de l'élément de raccordement (5) est agencée dans un corps (9).

10. Engin de chantier mobile selon l'une quelconque des revendications précédentes, dans lequel l'actionneur hydraulique (3) comprend un élément de rappel (10) conçu pour ramener l'actionneur hydraulique (3) dans sa position initiale lorsque l'élément de remorquage (1) est libéré de la force de remorquage.

11. Engin de chantier mobile selon l'une quelconque des revendications précédentes, dans lequel l'actionneur hydraulique (3) comprend des raccords (11) destinés à être raccordés à un circuit hydraulique d'un système de freinage de l'engin de chantier mobile (200), et dans lequel la pression hydraulique créée dans l'actionneur hydraulique (3) en raison de la force de remorquage agissant sur l'élément de remorquage (2), est conçue pour desserrer les freins de l'engin de chantier mobile (200).

12. Engin de chantier mobile selon l'une quelconque des revendications précédentes, dans lequel l'engin de chantier mobile est un engin minier.
